# DEMANDE DE BREVET EUROPEEN

(11) **EP 2 592 358 A1**
(43) Date de publication de la demande: **15.05.2013**
(21) Numéro de dépôt: 12192245.4
(22) Date de dépôt: 12.11.2012
(51) Int. Cl.: F24D 11/02, F24D 17/02, F24D 19/10, F24F 5/00

(54) **Installation de regulation de temperature et de production d'eau chaude et methode de mise en oeuvre d'une telle installation**

(30) Priorité: 10.11.2011 FR 1160275
(71) Demandeur: CYTHELIA Expertise et Conseil, société de conseils et d'études en énergie solaire, 73000 Montagnole (FR); Compagnie Industrielle D'Applications Thermiques, 01350 Culoz (FR); Commissariat à l'Énergie Atomique et aux Énergies Alternatives, 75015 Paris (FR)
(72) Inventeur: Ricaud, Alain, 73000 Montagnole (FR)
(74) Mandataire: Myon, Gérard Jean-Pierre

(57) **Abrégé**

Cette installation (1) de régulation de la température d'un bâtiment (100) et de production d'eau chaude sanitaire comprend un système de chauffage ou de rafraichissement (2) intégré ou rapporté à la toiture (101) du bâtiment (100), des moyens de mise en dépression (10) pour entraîner un flux d'air (F), provenant de l'extérieur du bâtiment (100). L'installation comprend en outre un échangeur thermique air-eau (3), qui transfère l'énergie thermique du flux d'air (F) à une pompe à chaleur (4) réversible. Un circuit (B) comprend un organe de stockage (6) d'énergie thermique, au moins un organe de consommation d'énergie thermique (5, 9) alimenté en énergie thermique par l'organe de stockage (6) et une unité de commande (12) qui pilote le mode de fonctionnement de la pompe à chaleur (4). L'installation (1) est apte à fonctionner selon un premier mode de fonctionnement dans lequel la pompe à chaleur (4) fonctionne en mode rafraichissement, l'installation (1) produisant des frigories qui sont stockées dans l'organe de stockage (6).

## Description

La présente invention concerne une installation de régulation de température et de production d'eau chaude ainsi qu'une méthode de mise en oeuvre d'une telle installation.

Pour chauffer un bâtiment à partir d'une source thermique externe dont la température est inférieure à celle du bâtiment, et pour refroidir un bâtiment à partir d'une source thermique externe dont la température est supérieure à celle du bâtiment, il est connu d'utiliser une pompe à chaleur réversible. Les pompes à chaleur réversibles permettent de récupérer une énergie thermique gratuite et inépuisable, fournie par exemple par l'atmosphère ou le sol, et de s'en servir pour le chauffage et le rafraichissement d'un bâtiment.

Les pompes à chaleur air-air ou air-eau permettent de chauffer les bâtiments en prélevant les calories de l'air ambiant. Les performances obtenues ne sont pas optimales en hiver, lorsqu'on souhaite chauffer le bâtiment, car la température de l'air ambiant est souvent très basse.

Pour améliorer les performances des pompes à chaleur air-air ou air-eau, il est connu d'associer un puits canadien, ou échangeur air-sol, qui comprend un échangeur géothermique enterré qui préchauffe l'air ambiant en hiver et le refroidit préalablement en été. L'installation d'un puits canadien est compliquée et coûteuse et certains bâtiments ne peuvent pas en être équipés, comme par exemple un grand nombre d'immeubles ou maisons en milieu urbain.

En alternative, il est connu d'utiliser des capteurs solaires thermiques à air ou à eau comme source thermique d'une pompe à chaleur. Les capteurs solaires thermiques à eau sont coûteux, ce qui conduit généralement à ne pas en installer un grand nombre pour optimiser le coût de l'installation. Ainsi, en été, lorsque les besoins en chauffage sont faibles, le système est surdimensionné et, en hiver, lorsque les besoins en chauffage sont importants, le système est sous-dimensionné.

Dans certains systèmes connus, tels que les toitures photovoltaïques, les modules photovoltaïques doivent être installés dans le plan de la toiture et constituer l'élément principal d'étanchéité. Autrement dit, les modules photovoltaïques doivent remplacer la couverture de la toiture et ne pas dépasser de manière trop prononcée le plan de la toiture. Cette configuration, appelée «intégration totale», est recherchée et est fortement favorisée en France pour des raisons esthétiques et pratiques (les modules viennent en remplacement des matériaux de couverture pour les constructions neuves).

Le rendement et la durée de vie des modules photovoltaïques (PV) sont affectés de manière importante par les surchauffes dues à l'intégration au bâti, c'est à dire le manque d'aération par l'arrière des modules. Il a été démontré que la température nominale de fonctionnement de modules photovoltaïques peu ou pas ventilés par l'arrière dépasse de 20 °C la température de modules librement ventilés par l'avant et l'arrière. Ceci a pour conséquence de diminuer en moyenne leur productible annuel de 8% et de faire passer leur taux de dégradation de 0.8% /an à 1.6% /an, donc de réduire d'un facteur deux leur durée de vie.

A partir de ce constat, il devient important de ventiler les modules en face arrière pour en diminuer la température de fonctionnement et augmenter la durée de vie et plus largement de trouver toute solution permettant l'intégration au bâti qui n'affecterait ni le rendement des modules photovoltaïques ni l'accélération de leur vieillissement.

Dans certaines installations de chauffage, l'air préchauffé par la ventilation de modules solaires photovoltaïques est soit insufflé directement dans le bâtiment, soit valorisé en eau chaude au moyen d'un échangeur air-eau. Cependant, l'efficacité de ce type d'installation est relativement faible en hiver car la température atteinte est insuffisante pour assurer le chauffage du bâtiment. Ceci est aussi vrai pour l'utilisation directe de l'air préchauffé par tout autre moyen sous une toiture.

En outre, si un by-pass n'a pas été incorporé, les modules photovoltaïques ne sont ventilés uniquement lorsque l'installation produit de l'énergie thermique. Par conséquent, le rendement des modules photovoltaïques est dégradé particulièrement en été à cause de leur surchauffe, et leur durée de vie diminue.

Tous ces systèmes, bien que présentant des puissances thermiques importantes, ont le défaut de ne pas avoir des niveaux de température suffisants en hiver par rapport à la température de consigne du bâtiment (19 °C).

Pour pallier cette faiblesse de chauffage, certains autres systèmes transforment les calories basse température en calories haute température grâce à une pompe à chaleur dont la partie aéraulique est disposée au grenier. Ces systèmes qui utilisent une pompe à chaleur air-eau sont handicapés par leur température limite de fonctionnement de l'ordre de 45°C, qui est fréquemment atteinte et même dépassée dans un grenier.

Toutefois, ces systèmes ont encore deux défauts :
Premièrement, la chaleur produite n'est pas nécessairement en phase avec les besoins en chauffage, puisque l'air chaud est délivré à certains moments du jour, lorsque le soleil chauffe les modules photovoltaïques, alors que les besoins en chauffage du bâtiment sont plus importants particulièrement la nuit et les jours sans soleil. Deuxièmement, il ne permet pas de faire du rafraîchissement dans des conditions aussi favorables que la production de chaleur.

DE-A-30 19 475, sur lequel est basé le préambule de la revendication 1, divulgue une installation de régulation de la température d'un bâtiment et de production d'eau chaude sanitaire, à partir d'énergie thermique calorifique récupérée au niveau du toit. L'énergie thermique est récupérée par une pompe à chaleur. Toutefois, cette installation permet uniquement de valoriser la chaleur récupérée au niveau du toit, la pompe à chaleur fonctionnant en mode chauffage.

C'est à tous ces inconvénients qu'entend plus particulièrement remédier l'invention en proposant une installation de régulation de la température d'un bâtiment et de production d'eau chaude sanitaire, à partir d'énergie thermique (calorifique ou frigorifique) récupérée au niveau du toit, facile à mettre en oeuvre, ayant une efficacité améliorée et permettant de produire de la chaleur ou du froid lorsque les besoins l'imposent et que la toiture du bâtiment n'alimente pas en énergie thermique l'installation.

A cet effet, l'invention a pour objet une installation de régulation de la température d'un bâtiment et de production d'eau chaude sanitaire, comprenant :
- un système de chauffage ou de rafraichissement intégré ou rapporté à la toiture du bâtiment,
- des moyens de mise en dépression pour entraîner un flux d'air, provenant de l'extérieur du bâtiment, dans le système de chauffage ou de rafraichissement,
- un échangeur thermique air-fluide caloporteur, qui transfère l'énergie thermique du flux d'air à une pompe à chaleur réversible, qui fonctionne en mode chauffage ou en mode rafraichissement et qui comporte une zone de distribution pour la transmission de l'énergie thermique d'un fluide frigorigène de la pompe à chaleur à un liquide caloporteur d'un circuit, dit secondaire, comprenant un organe de stockage d'énergie thermique,
- au moins un organe de consommation d'énergie thermique alimenté en énergie thermique par l'organe de stockage,
- une unité de commande,
- au moins une pompe qui assure la circulation du liquide caloporteur dans le circuit secondaire.

L'installation est apte à fonctionner selon un premier mode de fonctionnement, prévu pour la production et le stockage d'énergie thermique, dans lequel le flux d'air alimente en énergie thermique la pompe à chaleur et dans lequel la pompe à chaleur transfère l'énergie thermique à l'organe de stockage.

Lorsque le premier mode de fonctionnement est actif en saison chaude et durant la nuit, l'unité de commande est programmée pour piloter la pompe à chaleur pour qu'elle fonctionne en mode rafraichissement, l'installation produisant des frigories qui sont stockées dans l'organe de stockage.

Lorsque le premier mode de fonctionnement est actif en saison froide et durant la journée, l'unité de commande est programmée pour piloter la pompe à chaleur pour qu'elle fonctionne en mode chauffage, l'installation produisant des calories qui sont stockées dans l'organe de stockage.

Grâce à l'invention, un réservoir de stockage stocke l'énergie thermique (calorifique ou frigorifique) pour permettre une utilisation des émetteurs thermiques déphasée dans le temps par rapport à la production d'énergie thermique fournie par le système de chauffage ou de rafraichissement. L'autonomie énergétique est ainsi considérablement améliorée pour le chauffage en hiver et pour le rafraichissement en été.

Selon des aspects avantageux mais non obligatoires de l'invention, une telle installation peut incorporer une ou plusieurs des caractéristiques suivantes, prises dans toutes combinaison techniquement admissible :
- L'installation comprend en outre un circuit primaire de liquide caloporteur et l'échangeur thermique air-fluide caloporteur transfère l'énergie thermique du flux d'air au liquide caloporteur du circuit primaire, la pompe à chaleur étant une pompe à chaleur eau-eau qui comporte une zone de captage pour la transmission de l'énergie thermique du circuit primaire au fluide frigorigène de la pompe à chaleur.
- L'installation est apte à fonctionner selon un deuxième mode de fonctionnement, prévu pour la production d'eau chaude sanitaire en saison froide ou en saison chaude pendant la journée, dans lequel la pompe à chaleur est éteinte, les calories du circuit primaire étant transmises à un ballon d'eau chaude sanitaire, constituant l'organe de consommation d'énergie thermique, qui se réchauffe.
- L'installation comprend en outre un ballon d'eau chaude sanitaire qui constitue un premier organe de consommation d'énergie thermique et qui est équipé d'un premier échangeur thermique et d'un second échangeur thermique pour le chauffage de l'eau chaude sanitaire, une entrée du ballon étant raccordée à un réseau de distribution d'eau.

Le circuit primaire comprend :
- une conduite aller, qui relie une seconde sortie de l'échangeur thermique à une entrée du premier échangeur thermique du ballon,
- une conduite retour, qui relie une sortie du premier échangeur thermique du ballon à une seconde entrée de l'échangeur thermique,
- une première vanne, installée sur la conduite aller entre une portion amont et une portion aval de la conduite aller, une entrée de la première vanne étant reliée à la portion amont et une première sortie de la première vanne étant reliée à la portion aval,
- une conduite de dérivation qui comprend une portion aller, qui relie une seconde sortie de la première vanne à une entrée de la zone de captage de la pompe à chaleur, et une portion retour, qui relie la zone de captage à la conduite retour.

La première vanne est commutable dans deux positions dans lesquelles l'entrée de la première vanne est reliée sélectivement à la première sortie ou à la seconde sortie, l'unité de commande pilote la position de la première vanne.
- L'échangeur thermique air-liquide caloporteur transfère directement l'énergie thermique du flux d'air à un circuit frigorigène de fluide frigorigène de la pompe à chaleur qui est de type air-eau, et le circuit frigorigène relie l'échangeur thermique air-liquide caloporteur à la pompe à chaleur.
- L'organe de stockage contient au moins un premier matériau à changement de phase, notamment encapsulé sous forme de billes, adapté pour le stockage d'énergie thermique et la température de fusion du premier matériau à changement de phase est de préférence comprise entre 7°C et 12°C, de manière à être compatible avec les régimes de fonctionnement classiques des systèmes de climatisation
- L'organe de stockage contient au moins un matériau à changement de phase, dit second, notamment encapsulé sous forme de billes, adapté pour le stockage d'énergie thermique et la température de fusion du second matériau à changement de phase est comprise entre 30 °C et 40 °C, de manière à être compatible avec les systèmes de chauffage basse température classiques.
- L'installation est apte à fonctionner selon un troisième mode de fonctionnement, prévu pour la production d'eau chaude sanitaire en saison froide ou en saison chaude pendant la journée, dans lequel la pompe à chaleur fonctionne en mode chauffage, les calories du flux d'air étant transmises à la pompe à chaleur, de sorte qu'un ballon d'eau chaude sanitaire, constituant l'organe de consommation d'énergie thermique, se réchauffe grâce à la pompe à chaleur qui lui fournit des calories.
- L'unité de commande pilote la marche, l'arrêt et l'intensité des moyens de mise en dépression et de préférence la marche et l'arrêt de la pompe à chaleur.
- L'unité de commande enregistre la consommation électrique de la pompe à chaleur, des moyens de mise en dépression et de chaque pompe.
- Le système de chauffage ou de rafraichissement du flux d'air est constitué par une chambre d'échange thermique qui débouche dans une première entrée de l'échangeur thermique et qui s'étend le long de la face intérieure de la toiture du bâtiment.
- Le système de chauffage ou de rafraichissement du flux d'air est constitué par une chambre d'échange thermique qui débouche dans une première entrée de l'échangeur thermique et qui s'étend le long d'une face arrière de modules photovoltaïques qui sont installés sur la toiture du bâtiment ou qui constituent la toiture et l'installation comprend un capteur de température qui mesure la température des modules photovoltaïques et qui est relié à l'unité de commande.
- L'installation comporte au moins un ballon d'eau chaude sanitaire et/ou un émetteur thermique prévu pour le chauffage et le rafraichissement du bâtiment, le ballon d'eau chaude sanitaire et/ou l'émetteur thermique constituant un organe de consommation d'énergie thermique et l'installation comprend de préférence une résistance électrique prévue pour chauffer le ballon.
- L'installation comprend en outre :
   - un ballon d'eau chaude sanitaire qui constitue un premier organe de consommation d'énergie thermique et qui est équipé d'un premier échangeur thermique et d'un second échangeur thermique pour le chauffage de l'eau chaude sanitaire, une entrée du ballon étant raccordée à un réseau de distribution d'eau,

Le circuit secondaire comprend :
- une conduite aller qui relie une sortie de la zone de distribution à une entrée d'une bouteille de découplage qui dissocie le débit du circuit secondaire du débit d'un circuit tertiaire de liquide caloporteur, le circuit tertiaire comportant au moins un émetteur thermique qui constitue un second organe de consommation d'énergie thermique et qui est prévu pour chauffer ou rafraichir le bâtiment, l'organe de stockage d'énergie thermique étant intercalé entre une portion amont et une portion aval de la conduite aller,
- une vanne, dite seconde, installée sur la portion amont de la conduite aller,
- une conduite retour qui relie une sortie de la bouteille de découplage à une entrée de la zone de distribution de la pompe à chaleur,
- une conduite de dérivation qui comprend une portion aller, qui relie la seconde sortie de la seconde vanne à l'entrée du second échangeur thermique, et une portion retour, qui relie la sortie du second échangeur thermique à la conduite retour du circuit secondaire,

La seconde vanne est commutable dans deux positions, dans lesquelles l'entrée de la seconde vanne est reliée sélectivement à la première sortie ou à la seconde sortie, et l'unité de commande pilote la position de la seconde vanne.

L'invention a également pour objet une méthode de mise en oeuvre d'une telle installation, dans laquelle l'utilisation de l'énergie thermique stockée dans l'organe de stockage, pour l'alimentation de l'organe de consommation d'énergie thermique, est déphasée dans le temps par rapport à la production d'énergie thermique de la pompe à chaleur.

L'invention sera mieux comprise et d'autres avantages de celles-ci apparaîtront plus clairement à la lumière de la description qui va suivre d'une installation et d'une méthode de mise en oeuvre associée conformes à son principe, donnée uniquement à titre d'exemple et faite en référence aux dessins dans lesquels :
- Les figures 1 à 3 sont des représentations schématiques d'une installation de régulation de la température d'un bâtiment et de production d'eau chaude, conforme à l'invention, qui comprend deux vannes trois voies représentées dans deux positions différentes ; et
- les figures 4 et 5 sont des représentations schématiques d'une installation de régulation de la température d'un bâtiment et de production d'eau chaude, conforme à un deuxième mode de réalisation de l'invention, qui comprend une vanne trois voies représentée dans deux positions différentes.

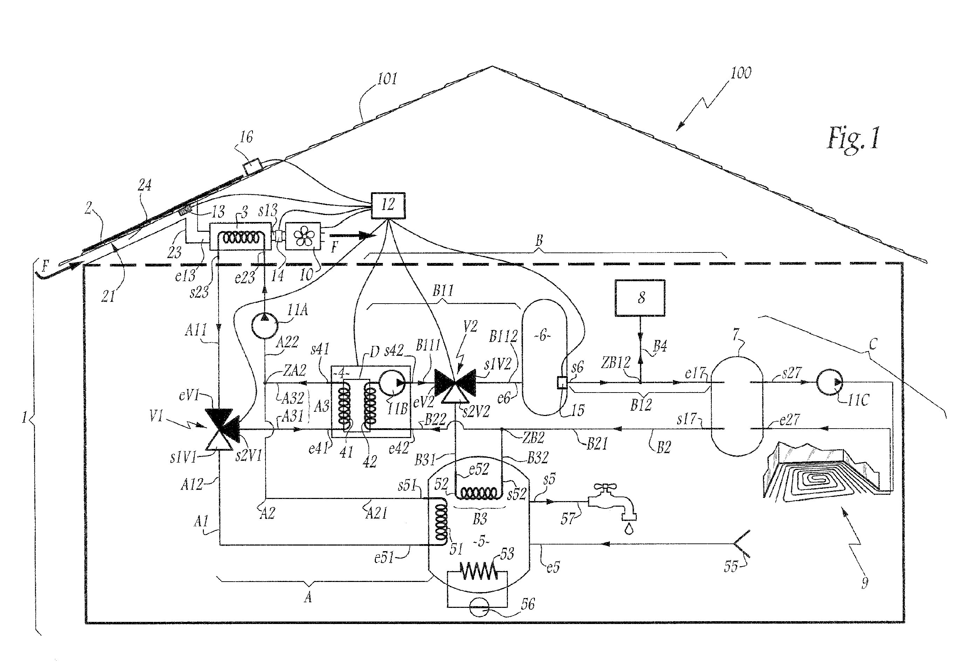

Les figures 1 à 3 représentent schématiquement une installation 1 de régulation de la température d'un bâtiment 100 et de production d'eau chaude sanitaire.

Dans la présente description, le terme « énergie thermique » est employé pour désigner indifféremment des calories et des frigories. Les calories permettent de mesurer la chaleur et les frigories permettent de mesurer le froid.

L'installation 1 comprend des panneaux photovoltaïques 2 installés sur une toiture 101 du bâtiment 100. Des moyens de mise en dépression 10, par exemple un extracteur d'air, aspirent un flux d'air F extérieur au bâtiment 100 dans une chambre d'échange thermique 24 qui s'étend le long d'une face arrière 21 des panneaux photovoltaïques 2, tournée à l'opposé des rayonnements solaires. La chambre 24 débouche dans une gaine 23 raccordée à une première entrée e13 d'un échangeur thermique air-eau 3, ou à proprement parler un échangeur thermique air-liquide caloporteur, qui transmet l'énergie thermique du flux d'air F à un liquide caloporteur qui circule dans un circuit primaire A. Par extension, l'échangeur thermique 3 peut également être qualifié d'échangeur air-fluide caloporteur.

Sur les figures, les flèches qui sont représentées sur les conduites représentent le sens de l'écoulement du fluide.

L'échangeur 3 comporte un canal de circulation du flux d'air F, qui s'étend entre la première entrée e13 et une première sortie s13 de l'échangeur 3, et un canal de circulation du liquide caloporteur du circuit primaire A, qui s'étend entre une seconde entrée e23 et une seconde sortie s23 de l'échangeur 3.

L'installation 1 comprend un ballon d'eau chaude sanitaire 5, équipé de deux échangeurs thermiques eau-eau 51 et 52, ou à proprement parler deux échangeurs thermiques liquide caloporteur-eau 51 et 52, et une pompe à chaleur réversible eau-eau 4, ou à proprement parler une pompe à chaleur réversible liquide caloporteur-liquide caloporteur. L'échangeur 51 comporte une entrée e51 et une sortie s51 pour la circulation du liquide caloporteur du circuit primaire A. Une entrée e5 du ballon 5 est alimentée en eau froide par un réseau de distribution d'eau 55. Une sortie s5 du ballon 5 est reliée à une conduite de puisage 57, pour la distribution de l'eau chaude aux usagers du bâtiment 100. Une résistance 53, alimentée en énergie électrique par un-réseau électrique de distribution 56, est prévue pour réchauffer l'eau chaude sanitaire contenue dans le ballon 5.

La pompe à chaleur 4 comprend un circuit D de fluide frigorigène qui circule dans un condenseur, un détendeur, un évaporateur et un compresseur. Le compresseur de la pompe à chaleur 4, qui n'est pas représenté, assure la circulation du fluide frigorigène dans les conduites du circuit frigorigène D. La pompe à chaleur 4 fonctionne, par exemple, grâce à un moteur électrique non représenté, alimenté par le réseau 56. Le fluide frigorigène du circuit frigorigène D prélève de l'énergie thermique au circuit primaire A, au niveau d'une zone de captage 41 de la pompe à chaleur 4, et délivre cette énergie thermique à un circuit secondaire B de liquide caloporteur, au niveau d'une zone de distribution 42 de la pompe à chaleur 4.

Lorsque la pompe à chaleur 4 fonctionne en mode chauffage, le circuit primaire A fournit des calories au fluide frigorigène du circuit frigorigène D de la pompe à chaleur 4, et le fluide frigorigène du circuit frigorigène D fournit des calories au liquide caloporteur du circuit secondaire B qui se réchauffe. Au contraire, lorsque la pompe à chaleur 4 fonctionne en mode rafraichissement, le flux d'air F fournit des frigories au circuit primaire A. Le circuit primaire A fournit ces frigories au fluide frigorigène du circuit frigorigène D de la pompe à chaleur 4, et le fluide frigorigène du circuit frigorigène D fournit des frigories au liquide caloporteur du circuit secondaire B qui se refroidit.

Le circuit primaire A comprend une conduite aller A1 qui relie la seconde sortie s23 de l'échangeur 3 à l'entrée e51 de l'échangeur 51 du ballon 5. Une conduite retour A2 du circuit primaire A relie la sortie s51 de l'échangeur 51 à la seconde entrée e23 de l'échangeur 3.

Une vanne trois voies V1 est installée sur la conduite aller A1, entre, d'une part, une portion amont A11 de la conduite aller A1, qui relie la seconde sortie s23 de l'échangeur 3 à une entrée eV1 de la vanne V1, et, d'autre part, une portion aval A12 de la conduite aller A1, qui relie une première sortie s1V1 de la vanne V1 à l'entrée e51 de l'échangeur 51.

Dans la présente description, les termes "amont" et "aval" font référence au sens de l'écoulement des fluides dans leur circuit respectif, de l'amont vers l'aval, depuis une conduite aller jusqu'à une conduite retour et formant un circuit de circulation du fluide.

Le circuit primaire A comprend en outre une conduite de dérivation A3 qui comprend une portion aller A31, qui relie une seconde sortie s2V1 de la vanne V1 à une entrée e41 de la zone de captage 41 de la pompe à chaleur 4. Une portion retour A32 de la conduite de dérivation A3 relie la sortie s41 de la zone de captage 41 à une zone de raccordement ZA2 de la conduite retour A2. La conduite retour A2 comporte ainsi une portion amont A21, qui relie la sortie s51 de l'échangeur 51 à la zone de raccordement ZA2, et une portion aval A22, qui relie la zone de raccordement ZA2 à la seconde entrée e23 de l'échangeur 3. Au niveau de la zone de raccordement ZA2, le liquide caloporteur qui circule dans la portion amont A21 de la conduite retour A2 se mélange avec le liquide caloporteur qui circule dans la portion retour A32 de la conduite de dérivation A3, et rejoint la portion aval A22 de la conduite retour A2.

Le circuit secondaire B comporte un réservoir de stockage 6 du liquide caloporteur, ainsi qu'une bouteille de découplage 7 et un vase d'expansion 8 rempli de gaz sous pression pour réguler la pression du liquide caloporteur dans le circuit secondaire B.

L'échangeur 52 du ballon 5 comporte une entrée e52 et une sortie s52 pour la circulation du liquide caloporteur du circuit secondaire B.

La bouteille de découplage 7 comporte une première entrée e17 et une première sortie s17 reliées au circuit secondaire B et une seconde entrée e27 et une seconde sortie s27 reliées à un circuit tertiaire C de liquide caloporteur. Le circuit tertiaire C alimente un émetteur thermique 9 pour le chauffage et le rafraichissement du bâtiment 100. Dans l'exemple représenté sur les figures, l'émetteur thermique 9 est un plancher chauffant, mais en variante il peut s'agir d'émetteurs de plafond ou muraux à basse température, de ventilo-convecteurs, de batteries à eau intégrées à la ventilation du bâtiment, ou d'une combinaison de plusieurs émetteurs thermiques.

Chaque circuit A, B et C comporte une pompe 11A, 11B et 11C qui assure la circulation des liquides caloporteurs dans les conduites des circuits A, B et C. La pompe 11A est installée sur la portion aval A22 de la conduite retour A2 du circuit primaire A. Le liquide caloporteur est de l'eau glycolée, afin d'éviter le gel qui peut survenir lorsque la température du flux d'air F en entrée de l'échangeur 3 est négative.

La bouteille de découplage 7 permet de dissocier le débit du circuit secondaire B, qui est imposé par la pompe 11B interne à la pompe à chaleur 4, du débit du circuit tertiaire C, qui est imposé par la pompe 11C installée sur le circuit tertiaire C, entre la seconde sortie s27 de la bouteille de découplage 7 et l'émetteur thermique 9.

Le circuit secondaire B comprend une conduite aller B1, qui relie une sortie s42 de la zone de distribution 42 de la pompe à chaleur 4 à l'entrée e17 de la bouteille de découplage 7. Le réservoir de stockage 6 est intercalé entre, d'une part, une portion amont B11 de la conduite aller B1, qui relie la sortie s42 de la zone de distribution 42 à une entrée e6 du réservoir de stockage 6, et, d'autre part, une portion aval B12 de la conduite aller B1, qui relie une sortie s6 du réservoir de stockage 6 à l'entrée e17 de la bouteille de découplage 7.

Pour un bon fonctionnement de la bouteille de découplage 7, le débit volumique du circuit tertiaire C doit être plus faible que celui du circuit secondaire B. Si le débit volumique devient trop important dans le circuit secondaire B, l'équilibrage des débits s'effectue alors par l'intermédiaire de la bouteille de découplage 7, de la sortie s6 du réservoir de stockage 6 vers la pompe à chaleur 4. La température fournie au circuit tertiaire C correspond alors à la température en sortie s6 du réservoir de stockage 6. Si le débit volumique nécessaire dans le circuit tertiaire C est plus important que celui du circuit secondaire B, une partie du liquide caloporteur circulant dans la conduite retour du circuit tertiaire C s'écoule alors directement dans la conduite aller du circuit tertiaire C et se mélange avec le liquide caloporteur de la conduite aller B12 du circuit secondaire B. Cela provoque la réduction de température sur la conduite aller du circuit tertiaire C.

Une vanne V2 à trois voies est installée sur la portion amont B11 de la conduite aller B1, entre, d'une part, une première partie B111 de la portion amont B11, qui relie la sortie s42 de la zone de distribution 42 de la pompe à chaleur 4 à une entrée eV2 de la vanne V2, et, d'autre part, une seconde partie B112 de la portion amont B11, qui relie une première sortie s1 V2 de la vanne V2 à l'entrée e6 du réservoir de stockage 6.

Une conduite auxiliaire B4 du circuit secondaire B relie le vase d'expansion 8 à une zone de raccordement ZB12 de la portion aval B12 de la conduite aller B1. Dans la conduite auxiliaire, le liquide caloporteur est libre de circuler dans les deux sens.

Une conduite retour B2 du circuit secondaire B relie la sortie s17 de la bouteille de découplage 7 à l'entrée e42 de la zone de distribution 42 de la pompe à chaleur 4.

Une conduite de dérivation B3 du circuit secondaire B relie une seconde sortie s2V2 de la vanne V2 à une zone de raccordement ZB2 de la conduite retour B2, et alimente en liquide caloporteur l'échangeur 52 du ballon 5. La conduite de dérivation B3 comprend une portion aller B31 qui relie la seconde sortie s2V2 de la vanne V2 à l'entrée e52 de l'échangeur 52, et une portion retour B32 qui relie la sortie s52 de l'échangeur 52 à la zone de raccordement ZB2.

La conduite retour B2 comprend une portion amont B21, qui relie la sortie s17 de la bouteille de découplage 7 à la zone de raccordement ZB2, et une portion aval B22, qui relie la zone de raccordement ZB2 à l'entrée e42 de la zone de distribution 42. Au niveau de la zone de raccordement ZB2, le liquide caloporteur qui circule dans la portion amont B21 se mélange avec le liquide caloporteur qui circule dans la portion retour B32 de la conduite de dérivation B3 et rejoint la portion aval B22 de la conduite retour B2.

L'installation 1 comprend une unité de commande 12 qui pilote les vannes V1 et V2, la pompe à chaleur 4, les moyens de mise en dépression 10, la source d'énergie 56 qui alimente la résistance 53 et les pompes 11A, 11B, 11C assurant la circulation des liquides caloporteurs des circuits A, B et C. L'unité de commande 12 pilote ainsi également la marche, l'arrêt et éventuellement l'intensité du compresseur de la pompe à chaleur 4, qui assure la circulation du fluide frigorigène du circuit frigorigène D.

Un capteur de température 13, relié à l'unité de commande 12, est fixé sur la face arrière 21 des panneaux photovoltaïques 2. Le flux d'air F qui circule dans la chambre 24 refroidit les panneaux photovoltaïques, ce qui améliore leur rendement et augmente leur durée de vie. Plus l'intensité des moyens de mise en dépression 10 est importante, plus le débit du flux d'air F est important et plus la température T2 des panneaux photovoltaïques 2 est faible. L'unité de commande 12 est programmée pour augmenter l'intensité des moyens de mise en dépression 10 en fonction de la température T2 des panneaux photovoltaïques 2, de manière à réduire la température T2 lorsque les panneaux surchauffent.

La vanne V1 est commutable dans deux positions dans lesquelles l'entrée eV1 est reliée sélectivement à la première sortie s1V1 ou à la seconde sortie s2V1. Sur les figures, les voies eV1, s1 V1 ou s2V1 de la vanne V1 qui sont passantes sont noircies.

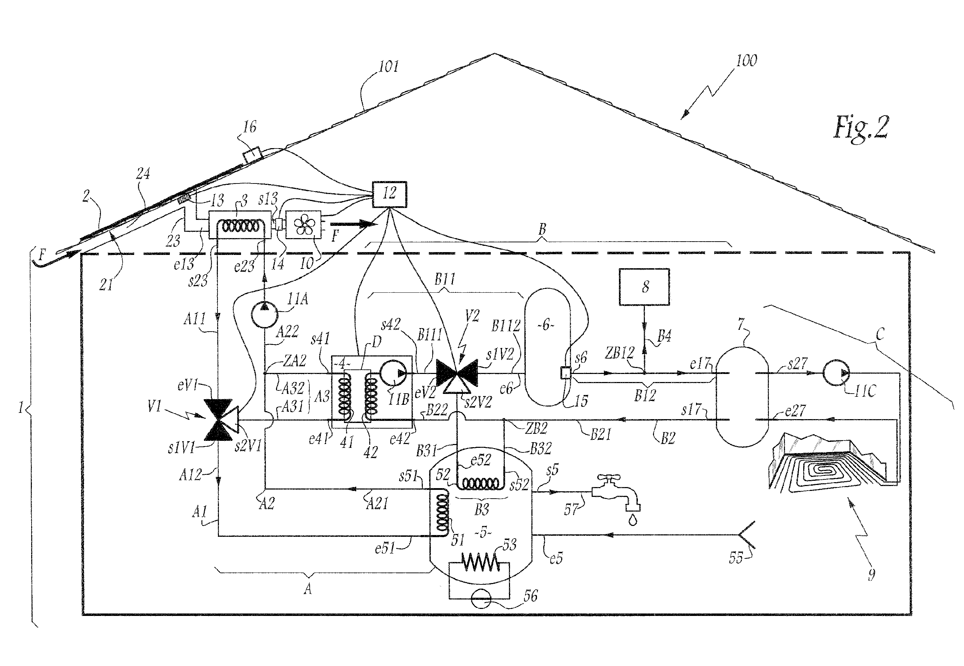

Dans une première position de la vanne V1, représentée à la figure 2, l'entrée eV1 de la vanne V1 communique uniquement avec la sortie s1 V1. Ainsi, le liquide caloporteur du circuit primaire A réchauffe le ballon 5, par l'intermédiaire de l'échangeur 51, et n'alimente pas en énergie thermique la pompe à chaleur 4. Cela permet de chauffer l'eau chaude sanitaire sans mettre en marche la pompe à chaleur 4 et donc sans fournir de l'énergie électrique au compresseur de la pompe à chaleur 4, ce qui est économique.

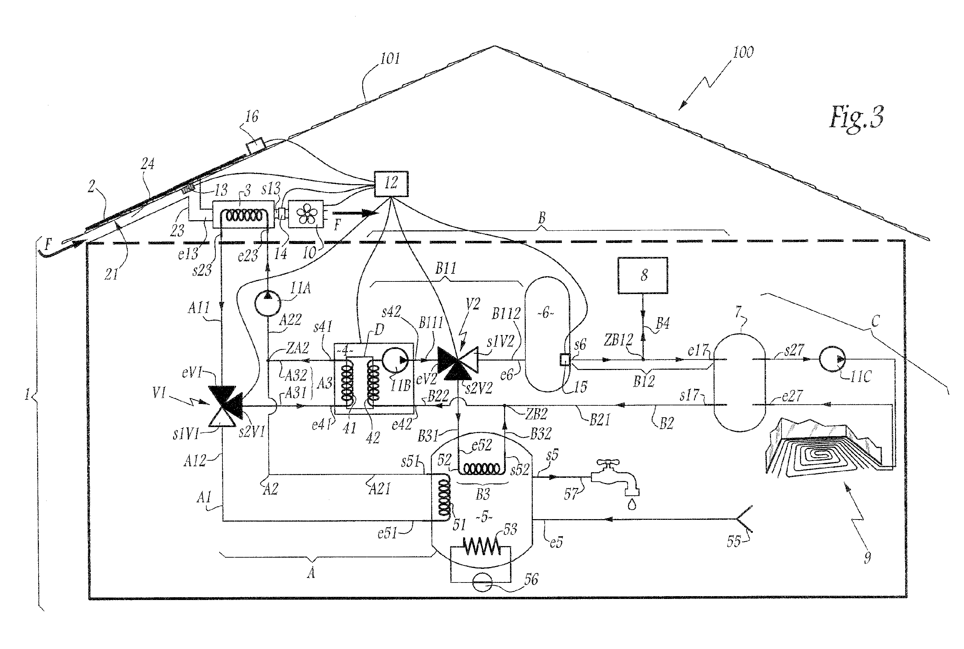

Dans une seconde position de la vanne V1, représentée aux figures 1 et 3, l'entrée eV1 de la vanne V1 communique uniquement avec la sortie s2V1. Ainsi, le liquide caloporteur du circuit primaire A fournit de l'énergie thermique à la pompe à chaleur 4, par l'intermédiaire de la zone de captage 41, et ne réchauffe pas le ballon 5. Cette position de la vanne V1 peut être utilisée lorsque la pompe à chaleur 4 fonctionne en mode chauffage, pour réchauffer le circuit secondaire B, ou lorsque la pompe à chaleur 4 fonctionne en mode rafraichissement, pour refroidir le circuit secondaire B.

La vanne V2 est commutable dans deux positions, dans lesquelles l'entrée eV2 est reliée sélectivement à la première sortie s1V2 ou à la seconde sortie s2V2. Sur les figures, les voies eV2, s1 V2 ou s2V2 de la vanne V2 qui sont passantes sont noircies.

Dans une première position de la vanne V2, représentée aux figures 1 et 2, l'entrée eV2 de la vanne V2 communique uniquement avec la sortie s1 V2. Ainsi, le liquide caloporteur du circuit secondaire B, réchauffé ou refroidi par la pompe à chaleur 4, fournit des calories ou des frigories au réservoir de stockage 6 et n'alimente pas l'échangeur 52 du ballon 5.

Dans une seconde position de la vanne V2, représentée à la figure 3, l'entrée eV2 de la vanne V2 communique uniquement avec la sortie s2V2. Cette position de la vanne 2 peut être activée lorsque la pompe à chaleur 4 fonctionne en mode chauffage. Le liquide caloporteur du circuit secondaire B fournit des calories uniquement au ballon 5, par l'intermédiaire de l'échangeur 52, et n'alimente pas le réservoir de stockage 6.

L'unité de commande 12 permet de piloter la position des vannes V1 et V2, la marche et l'arrêt ainsi que le fonctionnement en mode chauffage ou rafraichissement de la pompe à chaleur 4 et la marche et l'arrêt ainsi que l'intensité des moyens de mise en dépression 10.

L'unité de commande 12 pilote également la marche, l'arrêt et l'intensité des pompes 11A, 11B et 11C et du compresseur de la pompe à chaleur 4, assurant la circulation du fluide frigorigène du circuit frigorigène D.

Eventuellement, dans un but d'évaluation des performances énergétiques de l'installation 1, l'unité de commande 12 enregistre la consommation électrique de la pompe à chaleur 4, des moyens de mise en dépression 10, des pompes 11A, 11B et 11C et du compresseur de la pompe à chaleur 4, assurant la circulation du fluide frigorigène du circuit frigorigène D.

Pour le pilotage des vannes V1 et V2, l'installation 1 comprend en outre un capteur de température 14 qui mesure la température TF du flux d'air F dans l'échangeur 3. Un capteur de température 15 est installé en sortie du réservoir 6 et mesure la température T6 du liquide caloporteur contenu dans le réservoir 6. Un capteur de température 16 est installé à l'extérieur du bâtiment 100 et mesure la température extérieure Text. Les capteurs 14, 15 et 16 sont reliés à l'unité de commande 12.

La suite de la description concerne un premier mode de fonctionnement de l'installation 1, représenté à la figure 1, prévu pour la production et le stockage de frigories en saison chaude durant la nuit ou pour la production et le stockage de calories en saison froide pendant la journée. Dans le premier mode de fonctionnement, la première vanne V1 est dans la seconde position et la seconde vanne V2 est dans la première position.

Dans un premier paramétrage du premier mode de fonctionnement, prévu pour fonctionner en saison chaude et durant la nuit, la pompe à chaleur 4 fonctionne en mode rafraichissement. L'équilibre radiatif des panneaux photovoltaïques 2 avec la voute céleste entraine une baisse de leur température T2.

Plus précisément, sous réserve d'une décroissance normale de la tension de vapeur saturante avec l'altitude, on peut estimer que le rayonnement atmosphérique par temps clair est fortement corrélé à la température de l'air et à la tension de vapeur de l'eau au sol. Si l'on admet que l'atmosphère émet comme un corps noir, on peut lui attribuer une température apparente d'émission correspondant au rayonnement atmosphérique reçu au sol. Ainsi, la température d'émission du "plafond" atmosphérique constitué par un ciel sans nuages, dans le cas d'une atmosphère moyenne, peut être déduite de la température de l'air mesurée, en lui soustrayant la quantité ΔT, principalement liée à la tension moyenne de vapeur d'eau au sol par la correspondance valable aux faibles altitudes : ΔT = 36.t - 0.23, avec ΔT exprimé en °C et t exprimé en mbar.

Dans le cas d'un ciel couvert de nuages bas, le bilan radiatif nocturne reste généralement très proche de zéro : le refroidissement nocturne est alors négligeable.

Dans le cas d'un ciel clair sans nuage, qui correspond souvent aux journées de canicule, les pertes radiatives deviennent au contraire importantes et la température apparente du ciel de l'ordre de 20 °C inférieure à celle de l'air ambiant. Le refroidissement se produit jusqu'à une température d'équilibre telle que ces pertes par rayonnement nocturne soient compensées par des apports thermiques produits aussi bien par conduction que par convection (vent) ou changement d'état (condensations). Typiquement, par ciel clair, un toit peut se refroidir de 10 °C entre minuit et 6h du matin.

Les moyens de mise en dépression 10 sont activés et font circuler le flux d'air F dans la chambre 24, dans la gaine 23 et dans l'échangeur 3. Le flux d'air F, au contact de la face arrière 21 des panneaux photovoltaïques 2, se refroidit. Au niveau de l'échangeur 3, le flux d'air F fournit des frigories au liquide caloporteur du circuit primaire A qui se refroidit.

Dans le premier paramétrage, la vanne V1 est dans la seconde position, de sorte que le circuit primaire alimente en frigories la zone de captage 41 de la pompe à chaleur 4, tandis que le ballon 5 n'est pas relié au circuit primaire A pour éviter son refroidissement. La vanne V2 est dans la première position, de sorte que la pompe à chaleur 4 transfère les frigories au réservoir de stockage 6, tandis que le ballon 5 n'est pas relié au circuit secondaire B. Ainsi, durant la nuit, le réservoir de stockage 6 accumule des frigories. La nuit, ces frigories peuvent être utilisées pour rafraichir le bâtiment 100, au moyen des émetteurs thermiques 9 qui fonctionnent alors en mode climatiseur. Durant la journée en saison chaude, les frigories stockées par le réservoir de stockage 6 peuvent être utilisées pour rafraichir le bâtiment 100, au moyen de l'émetteur thermique 9 qui fonctionne alors en mode climatiseur. Ainsi, l'utilisation des frigories stockée dans le réservoir 6, pour le rafraichissement du bâtiment 100 au moyen de l'émetteur thermique 9, est déphasée dans le temps par rapport à la production, par la pompe à chaleur 4, des frigories stockées dans le réservoir 6.

Dans un second paramétrage du premier mode de fonctionnement, prévu pour fonctionner en saison froide et durant la journée, la pompe à chaleur 4 fonctionne en mode chauffage. Les rayonnements solaires réchauffent les panneaux photovoltaïques 2 et les moyens de mise en dépression 10 sont en marche et font circuler le flux d'air F dans la chambre 24, dans la gaine 23 et entre la première entrée e13 et la première sortie s13 de l'échangeur 3. Le flux d'air F, au contact de la face arrière 21 des panneaux photovoltaïques 2, se réchauffe. Au niveau de l'échangeur 3, le flux d'air F préchauffé fournit des calories au liquide caloporteur du circuit primaire A. La vanne V1 est dans la seconde position, de manière à transmettre les calories du circuit primaire A à la pompe à chaleur 4, tandis que le ballon 5 n'est pas relié au circuit primaire A.

La vanne V2 est dans la première position, de sorte que la pompe à chaleur 4 transfère des calories au réservoir de stockage 6, tandis que le ballon 5 n'est pas relié au circuit secondaire B. Ainsi, durant la journée, le réservoir de stockage 6 accumule des calories. La nuit, ces calories peuvent être utilisées pour chauffer le bâtiment 100, au moyen des émetteurs thermiques 9 qui fonctionnent alors en mode chauffage. De même, durant la journée en saison froide, les calories stockées par le réservoir de stockage 6 peuvent être utilisées pour chauffer le bâtiment 100, au moyen de l'émetteur thermique 9 qui fonctionne alors en mode chauffage. Ainsi, l'utilisation des calories stockées dans le réservoir 6, pour le chauffage du bâtiment 100 au moyen de l'émetteur thermique 9, est déphasée dans le temps par rapport à la production, par la pompe à chaleur 4, des calories stockées dans le réservoir 6.

En intersaison, lorsque les besoins en chauffage sont moins importants qu'en saison froide, la pompe à chaleur 4 réchauffe le circuit secondaire B dans une moindre mesure. Ainsi, il y a moins de calories stockées dans le réservoir de stockage 6 qu'en saison froide, ce qui est adapté aux besoins en chauffage. La capacité de stockage thermique du réservoir de stockage 6 est donc modulable.

Le réservoir de stockage 6 est dimensionné pour couvrir les besoins en chauffage pendant la durée de la nuit dans 90% des cas. Par exemple, le réservoir de stockage 6 a une capacité de 1000L. Pour les 10% restants, lorsque les besoins en chauffage sont exceptionnellement élevés et que les calories stockées par le réservoir de stockage 6 sont insuffisantes pour couvrir les besoins en chauffage du bâtiment 100 pendant la durée de la nuit, une source thermique d'appoint reliée aux émetteurs thermiques 9, par exemple une source électrique non représentée, prend le relais pour chauffer le bâtiment 100.

L'installation 1 présente un deuxième mode de fonctionnement, représenté à la figure 2, prévu pour la production d'eau chaude sanitaire en saison froide ou en saison chaude pendant la journée. Dans le deuxième mode de fonctionnement, la pompe à chaleur 4 est éteinte. Dans le deuxième mode de fonctionnement, les vannes V1 et V2 sont dans la première position. Le deuxième mode de fonctionnement est économique car il évite d'alimenter en énergie électrique le compresseur de la pompe à chaleur 4.

Dans le deuxième mode de fonctionnement, durant la journée, les rayonnements solaires réchauffent les panneaux photovoltaïques 2 et les moyens de mise en dépression 10 sont en marche et font circuler le flux d'air F dans la chambre 24, dans la gaine 23 et entre la première entrée e13 et la première sortie s13 de l'échangeur 3. Le flux d'air F, au contact de la face arrière 21 des panneaux photovoltaïques 2, se réchauffe. Au niveau de l'échangeur 3, le flux d'air F préchauffé fournit des calories au liquide caloporteur du circuit primaire A.

La vanne V1 est dans la première position, de manière à transmettre les calories du circuit primaire A à l'échangeur 51 du ballon 5 qui se réchauffe.

L'installation 1 présente un troisième mode de fonctionnement, représenté à la figure 3, prévu pour la production d'eau chaude sanitaire au moyen de la pompe à chaleur 4, en saison froide ou en saison chaude pendant la journée.

Dans le troisième mode de fonctionnement, la vanne V1 est dans la seconde position et la vanne V2 est dans la seconde position.

Dans le troisième mode de fonctionnement de l'installation 1, la pompe à chaleur 4 fonctionne en mode chauffage. Durant la journée, les rayonnements solaires réchauffent les panneaux photovoltaïques 2 et les moyens de mise en dépression 10 sont en marche et font circuler le flux d'air F dans la chambre 24, dans la gaine 23 et entre la première entrée e13 et la première sortie s13 de l'échangeur 3. Le flux d'air F, au contact de la face arrière 21 des panneaux photovoltaïques 2, se réchauffe. Au niveau de l'échangeur 3, le flux d'air F préchauffé fournit des calories au liquide caloporteur du circuit primaire A.

Dans le troisième mode de fonctionnement, la première vanne V1 est dans la seconde position, de manière à transmettre les calories du circuit primaire A à la pompe à chaleur 4. Ainsi, les calories du flux d'air F sont transmises à la pompe à chaleur 4. De même, durant la journée, la vanne V2 est dans la seconde position, de sorte que le ballon 5 se réchauffe grâce à la pompe à chaleur 4 qui fournit des calories à l'échangeur 52.

Les utilisateurs peuvent utiliser l'eau chaude sanitaire du ballon 5, chauffée par le circuit secondaire B.

Lorsque le deuxième mode de fonctionnement est actif, il est possible d'utiliser l'énergie thermique stockée dans le réservoir 6 pour chauffer ou rafraichir le bâtiment 100 pendant que l'installation 1 produit de l'eau chaude sanitaire. La vanne V2 est alors dans la première position et les pompes 11B et 11C font circuler le liquide caloporteur dans les circuits B et C.

Quel que soit le mode de fonctionnement de l'installation 1, la résistance 53 peut compléter le chauffage du ballon 5, lorsque les rayonnements solaires ne sont pas suffisants. En particulier, la résistance 53 peut élever périodiquement la température de l'eau chaude sanitaire stockée pour éviter le développement de la légionellose.

L'installation 1 est économique car elle permet à la fois de chauffer et de refroidir le bâtiment 100 et de produire de l'eau chaude sanitaire. Le coût de l'exploitation de l'installation 1 est réduit grâce à l'amélioration des rendements et à l'utilisation déphasée dans le temps de l'énergie thermique. Grâce à sa polyvalence, l'installation 100 présente des temps de conception, d'approvisionnement du chantier et de pose réduits.

La suite de la description, donnée à titre d'exemple, concerne une méthode de pilotage de l'installation 1, réalisée par l'unité de commande 12 pour adapter les modes de fonctionnement de l'installation 1 aux besoins des usagers du bâtiment 100.

Le fonctionnement de la pompe à chaleur 4 en mode chauffage ou rafraichissement est déterminé selon un calendrier préétabli, en fonction du climat de la zone géographique du bâtiment 100. La pompe à chaleur 4 fonctionne en mode chauffage durant la saison froide, par exemple entre le mois d'octobre et le mois d'avril, et en mode rafraichissement durant la saison chaude, par exemple entre le mois de mai et le mois de septembre.

La température T6 du réservoir 6 évolue en fonction de la saison, pour permettre le chauffage du bâtiment 100 en saison froide et le rafraichissement du bâtiment 100 en saison chaude. Durant la saison froide, les besoins en chauffage sont d'autant plus importants que la température Text est basse. De même, durant la saison chaude, les besoins en rafraichissement sont d'autant plus importants que la température extérieure Text est élevée. L'opérateur programme préalablement, dans l'unité de commande 12, des températures de consigne T6c pour la température T6, selon un calendrier tenant compte des évolutions de la température extérieure Text au cours des saisons. En fonctionnement, grâce au capteur de température 15, l'unité de commande 12 pilote l'installation 1 pour que la température T6 soit proche ou égale à la température de consigne T6c programmée dans l'unité de commande 12 pour la période en cours.

L'unité de commande 12 est programmée pour donner la priorité à la production d'eau chaude sanitaire (deuxième et troisième modes de fonctionnement) ou au stockage d'énergie thermique pour le chauffage ou le rafraichissement du bâtiment 100 (premier mode de fonctionnement). Par exemple, si la priorité est donnée à la production d'eau chaude sanitaire, le deuxième ou le troisième mode de fonctionnement est activé à partir d'une heure prédéterminée, programmée dans l'unité de commande 12. Le deuxième ou le troisième mode de fonctionnement est maintenu actif jusqu'à ce qu'une température de consigne T5c prédéterminée soit atteinte. La température de consigne T5c concerne par exemple la température T5 de l'eau chaude sanitaire contenue dans le ballon 5, mesurée à l'aide d'un capteur non représenté. En complément, l'unité de commande 12 tient compte de la température du liquide caloporteur du circuit primaire A ou du circuit secondaire B.

Lorsqu'il convient de produire de l'eau chaude sanitaire, l'unité de commande 12 choisit le deuxième ou le troisième mode de fonctionnement, selon que la température TF du flux d'air F est suffisante ou non pour permettre la production d'eau chaude sanitaire sans l'aide de la pompe à chaleur 4. Lorsque la température TF du flux d'air F est supérieure à une température minimale TFmin prédéterminée, cela signifie que la température TF est suffisante pour chauffer le ballon 5 sans l'aide de la pompe à chaleur 4 et le deuxième mode de fonctionnement est activé. Au contraire, lorsque la température TF du flux d'air F est inférieure à la température TFmin, cela signifie qu'il est nécessaire d'activer la pompe à chaleur 4 pour permettre le chauffage du ballon 5 et le troisième mode de fonctionnement est activé.

La pompe à chaleur 4 fonctionne efficacement lorsque la différence ΔT entre la température TF du flux d'air et la température extérieure Text est supérieure ou égale à une différence minimale ΔTmin prédéterminée. En saison froide, la pompe à chaleur 4 fonctionne en mode chauffage et la température TF est supérieure à la température extérieure Text. En saison chaude la nuit, la pompe à chaleur 4 fonctionne en mode rafraichissement et la température TF est inférieure à la température extérieure Text.

En saison froide et durant la journée, lorsqu'il convient de produire et stocker des calories dans le réservoir 6, si la température T6 du réservoir 6 est inférieure à une température minimale de consigne T6min prédéterminée et si la différence ΔT est supérieure à la différence ΔTmin, alors l'unité de commande 12 active le premier mode de fonctionnement jusqu'à ce que la température T6 ait atteint la température de consigne T6c.

En saison chaude et durant la nuit, lorsqu'il convient de produire et stocker des frigories dans le réservoir 6, si la température T6 du réservoir 6 est supérieure à une température maximale de consigne T6max prédéterminée et lorsque la différence ΔT est suffisante, alors l'unité de commande 12 active le premier mode de fonctionnement jusqu'à ce que la température T6 ait atteint la température de consigne T6c.

L'invention présente d'autres avantages répertoriés ci-dessous.

Grâce à la circulation du flux d'air F le long de la face arrière 21 des panneaux photovoltaïques, l'installation 100 permet d'améliorer la durée de vie et les performances des panneaux photovoltaïques 2 en les refroidissant.

Les performances de la pompe à chaleur 4 sont améliorées car le circuit primaire A est préchauffé ou refroidi préalablement.

L'installation 1 permet d'éviter les court-cycles, c'est à dire qu'elle évite à la pompe à chaleur 4 de démarrer et de s'arrêter quelques minutes plus tard. Les court-cycles font des appels de courant important et fréquents, sont mauvais pour les compresseurs, et plus généralement pour tous les systèmes de chauffage.

L'évaporateur de la pompe à chaleur n'étant pas déporté, il est invisible.

Dans le cas où les modules photovoltaïques 2 constituent la toiture 101 du bâtiment 100, l'installation 2 est particulièrement esthétique.

L'utilisation du refroidissement nocturne par équilibre radiatif permet à la pompe à chaleur 4 de prélever ses frigories à une source chaude de 14-15 °C la nuit au tarif de nuit (période de surproduction électrique) au lieu de 30-32 °C le jour au tarif de jour (période de pointe de consommation) et ainsi de contribuer à une meilleure utilisation de la base et à l'effacement des pointes. Généralisé à l'ensemble des bâtiments, c'est une forme de stockage de l'énergie électrique de base.

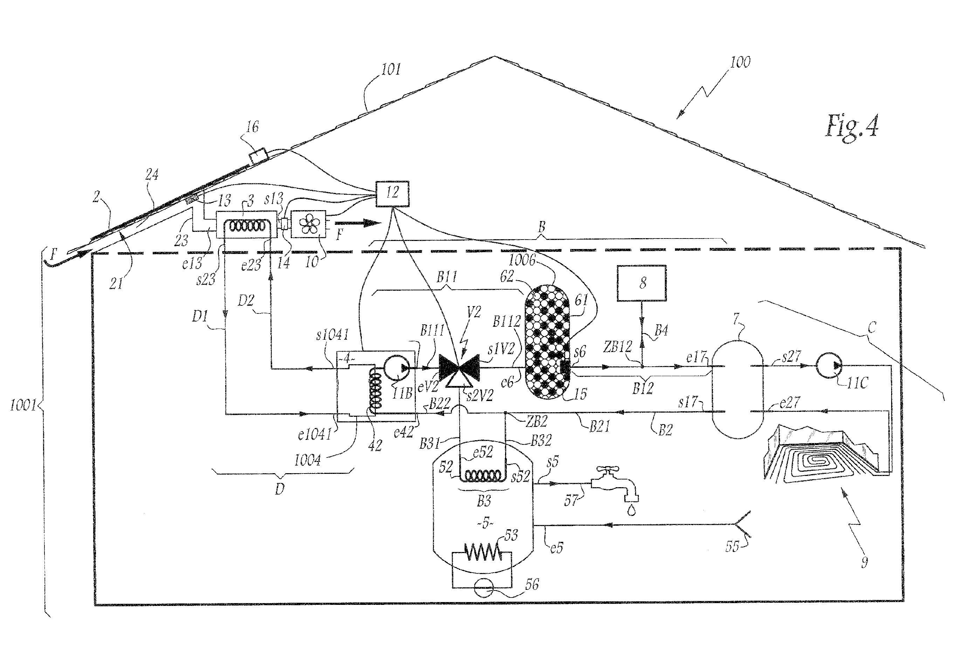

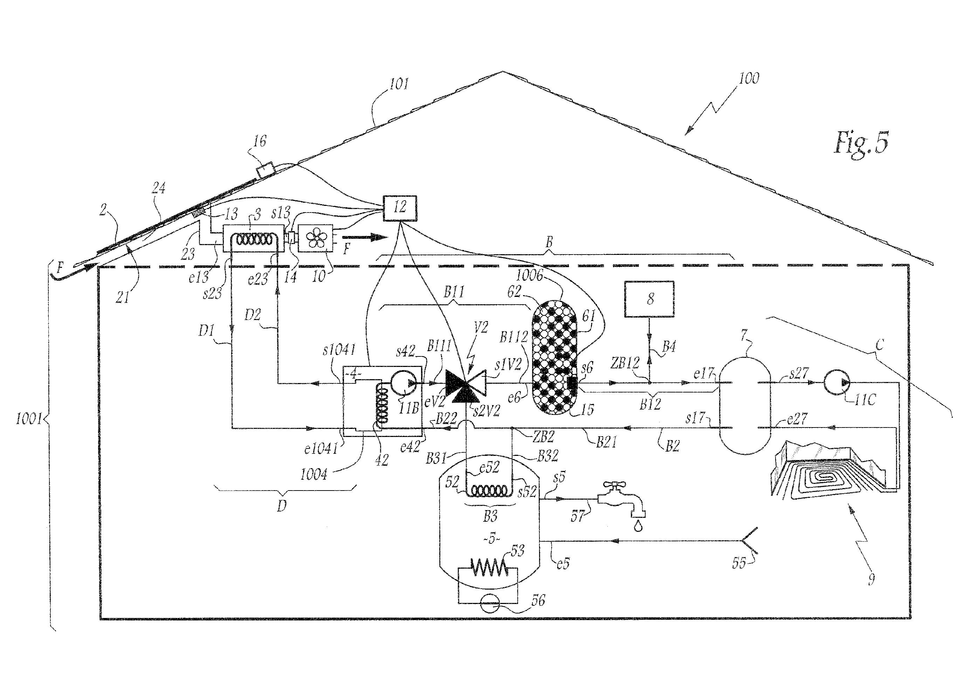

Les figures 4 et 5 montrent une installation 1001 conforme à un deuxième mode de réalisation de l'invention, dans lequel les éléments semblables à ceux du premier mode représenté aux figures 1 à 3 portent les mêmes références. Dans la suite, on ne décrit pas en détail les éléments du deuxième mode de réalisation semblables à ceux du premier mode.

L'installation 1001 diffère principalement de l'installation 1 en ce qu'elle ne comporte pas de circuit primaire A ni de première vanne V1.

L'installation 1001 comprend des panneaux photovoltaïques 2 installés sur une toiture 101 du bâtiment 100. Des moyens de mise en dépression 10 aspirent un flux d'air F extérieur au bâtiment 100 dans une chambre d'échange thermique 24 qui s'étend le long d'une face arrière 21 des panneaux photovoltaïques 2. La chambre 24 débouche dans une gaine 23 raccordée à une première entrée e13 d'un échangeur thermique air-fluide frigorigène 3, ou par extension un échangeur thermique air- fluide caloporteur, qui transmet l'énergie thermique du flux d'air F à un liquide frigorigène qui circule dans un circuit D, dit frigorigène, d'une pompe à chaleur 1004.

L'échangeur air-fluide frigorigène 3 constitue l'évaporateur de la pompe à chaleur 1004 lorsqu'elle fonctionne en mode chauffage, et son condenseur lorsqu'elle fonctionne en mode rafraichissement.

La pompe à chaleur 1004 est une pompe à chaleur réversible air-eau, ou à proprement parler une pompe à chaleur réversible air- liquide caloporteur, dans la mesure où elle est intercalée entre le flux d'air F et le circuit secondaire B de liquide caloporteur.

Contrairement au premier mode de réalisation, le circuit frigorigène D relie directement l'échangeur thermique 3 à la pompe à chaleur 1004. L'échangeur thermique 3 transfère ainsi directement l'énergie thermique du flux d'air F au circuit frigorigène D, sans l'intermédiaire d'un circuit de liquide caloporteur supplémentaire, tel que le circuit primaire A des figures 1 à 3.

L'échangeur 3 comporte un canal de circulation du flux d'air F, qui s'étend entre la première entrée e13 et une première sortie s13 de l'échangeur 3, et un canal de circulation du fluide frigorigène du circuit frigorigène D, qui s'étend entre une seconde entrée e23 et une seconde sortie s23 de l'échangeur 3.

Le circuit frigorigène D comprend une conduite aller D1, qui relie la seconde sortie s23 de l'échangeur 3 à une entrée e1041 d'un échangeur fluide frigorigène-liquide caloporteur 42 de la pompe à chaleur 1004. Le circuit frigorigène D comprend une conduite retour D2 qui relie une sortie s1041 de l'échangeur 42 à la seconde entrée e23 de l'échangeur 3.

Le fluide frigorigène du circuit frigorigène D circule dans un condenseur, un détendeur, un évaporateur et un compresseur de la pompe à chaleur 1004. La circulation du fluide frigorigène dans le circuit frigorigène D est assurée par le compresseur de la pompe à chaleur 4, qui n'est pas représenté.

Le fluide frigorigène du circuit frigorigène D prélève de l'énergie thermique au flux d'air F, et délivre cette énergie thermique à un circuit B, dit secondaire, de liquide caloporteur, au niveau de l'échangeur 42 de la pompe à chaleur 1004, qui forme une zone de distribution.

Le circuit secondaire B est analogue à celui des figures 1 à 3. Ainsi, le circuit secondaire B comporte une bouteille de découplage 7, un vase d'expansion 8, ainsi qu'un ballon d'eau chaude sanitaire 5 équipé d'un échangeur thermique liquide caloporteur-eau 52.

La bouteille de découplage 7 comporte une première entrée e17 et une première sortie s17 reliées au circuit secondaire B et une seconde entrée e27 et une seconde sortie s27 reliées à un circuit tertiaire C de liquide caloporteur. Le circuit tertiaire C alimente un émetteur thermique 9 pour le chauffage et le rafraichissement du bâtiment 100.

Le circuit secondaire B comprend également un réservoir de stockage 1006 du liquide caloporteur.

Chaque circuit B et C et D comporte une pompe 11B ou 11C qui assure la circulation des liquides caloporteurs et du fluide frigorigène dans les conduites des circuits B et C.

Le circuit secondaire B comporte une vanne V2 similaire à celle des figures 1 à 3 et l'installation 1001 comprend une unité de commande 12 qui pilote la vanne V2, la pompe à chaleur 1004, les moyens de mise en dépression 10, la source d'énergie 56 qui alimente la résistance 53 et les pompes 11B et 11C assurant la circulation des liquides caloporteurs des circuits B et C.

La suite de la description concerne un premier mode de fonctionnement de l'installation 1001, représenté à la figure 4, prévu pour la production et le stockage de frigories en saison chaude durant la nuit ou pour la production et le stockage de calories en saison froide pendant la journée. Dans le premier mode de fonctionnement, la seconde vanne V2 est dans la première position, l'entrée eV2 de la vanne V2 communique uniquement avec la sortie s1 V2 reliée au réservoir de stockage 1006.

Dans un premier paramétrage du premier mode de fonctionnement, prévu pour fonctionner en saison chaude et durant la nuit, la pompe à chaleur 1004 fonctionne en mode rafraichissement.

Les moyens de mise en dépression 10 sont activés et font circuler le flux d'air F dans la chambre 24, dans la gaine 23 et dans l'échangeur 3. Le flux d'air F, au contact de la face arrière 21 des panneaux photovoltaïques 2, se refroidit. Au niveau de l'échangeur 3, le flux d'air F fournit des frigories au fluide frigorigène du circuit frigorigène D de la pompe à chaleur 1004, qui se refroidit.

La vanne V2 est dans la première position, de sorte que la pompe à chaleur 1004 transfère les frigories du circuit D au réservoir de stockage 1006, tandis que le ballon 5 n'est pas relié au circuit secondaire B. Ainsi, durant la nuit, le réservoir de stockage 1006 accumule des frigories. La nuit, ces frigories peuvent être utilisées pour rafraichir le bâtiment 100, au moyen des émetteurs thermiques 9 qui fonctionnent alors en mode climatiseur. Durant la journée en saison chaude, les frigories stockées par le réservoir de stockage 1006 peuvent être utilisées pour rafraichir le bâtiment 100, au moyen de l'émetteur thermique 9 qui fonctionne alors en mode climatiseur. Ainsi, l'utilisation des frigories stockées dans le réservoir 1006, pour le rafraichissement du bâtiment 100 au moyen de l'émetteur thermique 9, est déphasée dans le temps par rapport à la production, par la pompe à chaleur 1004, des frigories stockées dans le réservoir 1006.

Dans un second paramétrage du premier mode de fonctionnement, prévu pour fonctionner en saison froide et durant la journée, la pompe à chaleur 1004 fonctionne en mode chauffage. Les rayonnements solaires réchauffent les panneaux photovoltaïques 2 et les moyens de mise en dépression 10 sont en marche et font circuler le flux d'air F dans la chambre 24, dans la gaine 23 et entre la première entrée e13 et la première sortie s13 de l'échangeur 3. Le flux d'air F, au contact de la face arrière 21 des panneaux photovoltaïques 2, se réchauffe. Au niveau de l'échangeur 3, le flux d'air F préchauffé fournit des calories au fluide frigorigène du circuit D.

La vanne V2 est dans la première position, de sorte que la pompe à chaleur 1004 transfère des calories au réservoir de stockage 1006, tandis que le ballon 5 n'est pas relié au circuit secondaire B. Ainsi, durant la journée, le réservoir de stockage 1006 accumule des calories. La nuit, ces calories peuvent être utilisées pour chauffer le bâtiment 100, au moyen des émetteurs thermiques 9 qui fonctionnent alors en mode chauffage. De même, durant la journée en saison froide, les calories stockées par le réservoir de stockage 1006 peuvent être utilisées pour chauffer le bâtiment 100, au moyen de l'émetteur thermique 9 qui fonctionne alors en mode chauffage. Ainsi, l'utilisation des calories stockées dans le réservoir 1006, pour le chauffage du bâtiment 100 au moyen de l'émetteur thermique 9, est déphasée dans le temps par rapport à la production, par la pompe à chaleur 1004, des calories stockées dans le réservoir 1006.

L'installation 1001 présente un autre mode de fonctionnement, dit troisième mode, représenté à la figure 5 et prévu pour la production d'eau chaude sanitaire au moyen de la pompe à chaleur 1004, en saison froide ou en saison chaude pendant la journée.

Dans le troisième mode de fonctionnement, la vanne V2 est dans la seconde position, l'entrée eV2 de la vanne V2 communique uniquement avec la sortie s2V2 reliée au ballon 5.

Dans le troisième mode de fonctionnement de l'installation 1001, la pompe à chaleur 1004 fonctionne en mode chauffage. Durant la journée, les rayonnements solaires réchauffent les panneaux photovoltaïques 2 et les moyens de mise en dépression 10 sont en marche et font circuler le flux d'air F dans la chambre 24, dans la gaine 23 et entre la première entrée e13 et la première sortie s13 de l'échangeur 3. Le flux d'air F, au contact de la face arrière 21 des panneaux photovoltaïques 2, se réchauffe. Au niveau de l'échangeur 3, le flux d'air F préchauffé fournit des calories au fluide frigorigène du circuit frigorigène D de la pompe à chaleur 1004.

La vanne V2 est dans la seconde position, de sorte que le ballon 5 se réchauffe grâce à la pompe à chaleur 1004 qui fournit des calories à l'échangeur 52.

Les utilisateurs peuvent utiliser l'eau chaude sanitaire du ballon 5, chauffée par le circuit secondaire B.

En variante, le flux d'air F n'est pas préchauffé ou refroidi par des panneaux photovoltaïques mais par tout système qui récupère de l'énergie thermique au niveau de la toiture 101 du bâtiment 100, par exemple un espace étanche entre couverture et pare-pluie, ouvert en bas du toit et complété par une gaine d'extraction d'air située sous le toit 101, au niveau du faîtage et le long du toit 101.

En alternative à l'échangeur air-eau 3 précédemment décrit, le système d'échange air-liquide caloporteur peut être constitué par un échangeur tubulaire à ailettes qui s'étend le long du faîte de la toiture 101, à l'intérieur du bâtiment 100.

En variante, pour réguler le débit du flux d'air F, les moyens de mise en dépression 10 comprennent une ou plusieurs tourelles d'extraction à vitesse variable, qui sont reliées à la gaine 23.

En variante, un ballon de stockage à stratification peut également être utilisé.

En variante, pour les installations 1 et 1001 le stockage de l'énergie thermique est assuré par un ou plusieurs matériaux à changement de phase (MCP) aptes à emmagasiner et restituer de l'énergie thermique (calorifique ou frigorifique). Lorsqu'un MCP passe de l'état solide à l'état liquide ou inversement, il reste à température constante et absorbe ou restitue de la chaleur (chaleur latente). Les matériaux à changement de phase peuvent être encapsulés et positionnés dans le réservoir de stockage 6 ou 1006. Les capsules de MCP absorbent l'énergie thermique (calorifique ou frigorifique) du liquide caloporteur du circuit secondaire B, ce qui induit le changement de phase du MCP. Par exemple, pour le stockage de calories, le liquide caloporteur du circuit secondaire B transmet des calories aux capsules de MCP. Le MCP se liquéfie et stocke des calories. Lors du déstockage du réservoir 6 ou 1006, les capsules de MCP restituent l'énergie accumulée au liquide caloporteur qui se trouve dans le réservoir de stockage 6. Par exemple, pour restituer les calories emmagasinées, le MCP se solidifie et restitue les calories stockées au liquide caloporteur du circuit secondaire B. Ceci permet de réduire la taille du réservoir de stockage 6 tout en gardant ou augmentant l'énergie stockée.Cette variante est représentée pour l'installation 1001 des figures 4 et 5 uniquement, étant entendu que dans une variante non représentée de l'invention, le réservoir 6 de l'installation 1 peut également intégrer un réservoir de stockage incluant au moins un matériau à changement de phase.

Le réservoir de stockage 1006 contient ainsi des billes 61 et 62 remplies d'un matériau à changement de phase, entre lesquelles le liquide caloporteur du circuit secondaire B circule ou est stocké. Le matériau à changement de phase est de préférence encapsulé dans une enveloppe en matière plastique, qui résiste aux températures du liquide caloporteur du circuit secondaire B.

Le matériau à changement de phase qui remplit les premières billes 61 est adapté pour le stockage de frigories. Il s'agit préférentiellement d'une substance dont la température de fusion est comprise entre 7 °C et 12 °C, de préférence de l'ordre de à 8 °C, de sorte que sa température est compatible avec les régimes de fonctionnement classiques des groupes froid.

Une alternative à l'utilisation de tels MCP est la mise en oeuvre de billes contenant de l'eau pure qui en gelant jouera le même rôle que les MCP décrits précédemment. Dans ce cas, la température du liquide caloporteur du circuit secondaire B est choisie inférieure à 0 °C, par exemple -5 °C. Dans ce cas, pour éviter le gel, le liquide caloporteur est constitué par de l'eau additivée avec un antigel tel que le glycol.

Les matériaux à changement de phase permettent de réduire le volume de stockage d'un facteur 10 à 20, en comparaison avec le réservoir de stockage 6 des figures 1 à 3 qui ne comporte pas de matériaux à changement de phase. Pour des réservoirs 6 et 1006 de même volume, le réservoir 1006 permet de stocker 10 à 20 fois plus de frigories que le réservoir 6. Par conséquent, pour une même quantité de frigories stockées, la température du liquide caloporteur du circuit secondaire B de l'installation 1001 peut être choisie supérieure à la température du liquide caloporteur du circuit secondaire B de l'installation 1.

Dans l'installation 1, pour éviter d'avoir un réservoir 6 de dimensions trop importantes, la température du liquide caloporteur du circuit secondaire B peut être choisie inférieure à 0 °C afin d'assurer le rafraichissement de l'installation 1. Dans ce cas, pour éviter le gel, les liquides caloporteurs sont constitués par de l'eau additivée avec un antigel tel que le glycol.

Dans le cas de l'installation 1001, la capacité de stockage de frigories du réservoir 1006 est suffisante pour que la température du liquide caloporteur du circuit secondaire B soit strictement positive et ne risque pas de geler. Il est alors possible d'utiliser de l'eau non additivée comme liquide caloporteur du circuit secondaire B.

Le matériau à changement de phase qui remplit les secondes billes 62 est adapté pour le stockage de calories. Il s'agit préférentiellement d'une substance dont la température de fusion est comprise entre 30 °C et 40 °C, de préférence de l'ordre de à 34 °C, de sorte que sa température est compatible avec les régimes de fonctionnement classiques des groupes de chauffage basse température.

En variante, l'installation 1 ne comporte pas de ballon d'eau chaude sanitaire 5 et le flux d'air F est utilisé uniquement pour le stockage d'énergie thermique en vue du chauffage ou du rafraichissement du bâtiment 100 au moyens d'émetteurs thermiques 9. Cette variante peut être utilisée, par exemple, pour des bâtiments qui comportent déjà un système de chauffage de l'eau chaude sanitaire.

Dans une autre variante de l'invention, l'installation 1 ne comporte pas d'émetteurs thermiques 9 et le flux d'air F est utilisé uniquement pour le chauffage du ballon d'eau chaude sanitaire. Cette variante peut être utilisée, par exemple, pour des bâtiments passifs à très faibles besoins de chauffage/rafraîchissement ou qui comportent déjà un système de chauffage et rafraichissement.

Dans les exemples représentés sur les figures, les réservoirs 6 et 1006 alimentent en énergie thermique un émetteur thermique 9 et l'échangeur 52 du ballon 5 mais en variante, l'énergie thermique stockée dans le réservoir 6 est utilisée pour le chauffage et le rafraichissement d'un organe de consommation d'énergie thermique (calorifique et frigorifique) quelconque. Eventuellement, l'organe de consommation d'énergie thermique est alimenté directement en énergie thermique par le réservoir de stockage 6, la bouteille de découplage 7 étant supprimée.

En variante, au moins l'un des circuits A, B et C comprend plusieurs pompes de circulation du liquide caloporteur ou du fluide frigorigène.

En outre, dans le cadre de l'invention, les variantes et les modes de réalisation décrits peuvent être combinés entre eux, au moins partiellement.

## Revendications

1. Installation (1 ; 1001) de régulation de la température d'un bâtiment (100) et de production d'eau chaude sanitaire, comprenant :
- un système de chauffage ou de rafraichissement (2) intégré ou rapporté à la toiture (101) du bâtiment (100),
- des moyens de mise en dépression (10) pour entraîner un flux d'air (F), provenant de l'extérieur du bâtiment (100), dans le système de chauffage ou de rafraichissement (2),
- un échangeur thermique air-fluide caloporteur (3), qui transfère l'énergie thermique du flux d'air (F) à une pompe à chaleur (4 ; 1004) réversible, qui fonctionne en mode chauffage ou en mode rafraichissement et qui comporte une zone de distribution (42) pour la transmission de l'énergie thermique d'un fluide frigorigène de la pompe à chaleur (4 ; 1004) à un liquide caloporteur d'un circuit (B), dit secondaire, comprenant un organe de stockage (6 ; 1006) d'énergie thermique,
- au moins un organe de consommation d'énergie thermique (5, 9) alimenté en énergie thermique par l'organe de stockage (6 ; 1006),
- une unité de commande (12),
- au moins une pompe (11B) qui assure la circulation du liquide caloporteur dans le circuit secondaire (B),
l'installation (1) est apte à fonctionner selon un premier mode de fonctionnement (figure 1 ; figure 4), prévu pour la production et le stockage d'énergie thermique, dans lequel le flux d'air (F) alimente en énergie thermique la pompe à chaleur (4 ; 1004) et dans lequel la pompe à chaleur (4 ; 1004) transfère l'énergie thermique à l'organe de stockage (6 ; 1006),
**caractérisée en ce que** lorsque le premier mode de fonctionnement (figure 1 ; figure 4) est actif en saison chaude et durant la nuit, l'unité de commande (12) est programmée pour piloter la pompe à chaleur (4 ; 1004) pour qu'elle fonctionne en mode rafraichissement, l'installation (1 ; 1001) produisant des frigories qui sont stockées dans l'organe de stockage (6 ; 1006),
et **en ce que** lorsque le premier mode de fonctionnement (figure 1 ; figure 4) est actif en saison froide et durant la journée, l'unité de commande (12) est programmée pour piloter la pompe à chaleur (4 ; 1004) pour qu'elle fonctionne en mode chauffage, l'installation (1 ; 1001) produisant des calories qui sont stockées dans l'organe de stockage (6 ; 1006).

2. Installation (1) selon la revendication 1, **caractérisée en ce qu'**elle comprend en outre un circuit primaire (A) de liquide caloporteur et **en ce que** l'échangeur thermique air-fluide caloporteur (3) transfère l'énergie thermique du flux d'air (F) au liquide caloporteur du circuit primaire (A), la pompe à chaleur (4) étant une pompe à chaleur eau-eau qui comporte une zone de captage (41) pour la transmission de l'énergie thermique du circuit primaire (A) au fluide frigorigène de la pompe à chaleur (4).

3. Installation (1) selon la revendication 2, **caractérisée en ce qu'**elle est apte à fonctionner selon un deuxième mode de fonctionnement (figure 2), prévu pour la production d'eau chaude sanitaire en saison froide ou en saison chaude pendant la journée, dans lequel la pompe à chaleur (4) est éteinte, les calories du circuit primaire (A) étant transmises à un ballon d'eau chaude sanitaire (5), constituant l'organe de consommation d'énergie thermique (5, 9), qui se réchauffe.

4. Installation (1) selon l'une des revendications 2 ou 3, **caractérisée en ce qu'**elle comprend en outre :
- un ballon d'eau chaude sanitaire (5) qui constitue un premier organe de consommation d'énergie thermique (5, 9) et qui est équipé d'un premier échangeur thermique (51) et d'un second échangeur thermique (52) pour le chauffage de l'eau chaude sanitaire, une entrée (e5) du ballon (5) étant raccordée à un réseau de distribution d'eau (55),
**en ce que** le circuit primaire (A) comprend :
- une conduite aller (A1), qui relie une seconde sortie (s23) de l'échangeur thermique (3) à une entrée (e51) du premier échangeur thermique (51) du ballon (5),
- une conduite retour (A2), qui relie une sortie (s51) du premier échangeur thermique (51) du ballon (5) à une seconde entrée (e23) de l'échangeur thermique (3),
- une première vanne (V1), installée sur la conduite aller (A1) entre une portion amont (A11) et une portion aval (A12) de la conduite aller (A1), une entrée (eV1) de la première vanne (V1) étant reliée à la portion amont (A11) et une première sortie (s1V1) de la première vanne (V1) étant reliée à la portion aval (A12),
- une conduite de dérivation (A3) qui comprend une portion aller (A31), qui relie une seconde sortie (s2V1) de la première vanne (V1) à une entrée (e41) de la zone de captage (41) de la pompe à chaleur (4), et une portion retour (A32), qui relie la zone de captage (41) à la conduite retour (A2),
**en ce que** la première vanne (V1) est commutable dans deux positions dans lesquelles l'entrée (eV1) de la première vanne (V1) est reliée sélectivement à la première sortie (s1V1) ou à la seconde sortie (s2V1),
et **en ce que** l'unité de commande (12) pilote la position de la première vanne (V1).

5. Installation (1001) selon la revendication 1, **caractérisée en ce que** l'échangeur thermique air-liquide caloporteur (3) transfère directement l'énergie thermique du flux d'air (F) à un circuit frigorigène (D) de fluide frigorigène de la pompe à chaleur (1004) qui est de type air-eau, et **en ce que** le circuit frigorigène (D) relie l'échangeur thermique air-liquide caloporteur (3) à la pompe à chaleur (1004).

6. Installation (1 ; 1001) selon l'une des revendications précédentes, **caractérisée en ce que** l'organe de stockage (1006) contient au moins un premier matériau à changement de phase, notamment encapsulé sous forme de billes (61), adapté pour le stockage d'énergie thermique et **en ce que** la température de fusion du premier matériau à changement de phase est de préférence comprise entre 7 °C et 12 °C, de manière à être compatible avec les régimes de fonctionnement classiques des systèmes de climatisation

7. Installation (1 ; 1001) selon l'une des revendications précédentes, **caractérisée en ce que** l'organe de stockage (1006) contient au moins un matériau à changement de phase, dit second, notamment encapsulé sous forme de billes (62), adapté pour le stockage d'énergie thermique et **en ce que** la température de fusion du second matériau à changement de phase est comprise entre 30 °C et 40 °C, de manière à être compatible avec les systèmes de chauffage basse température classiques.

8. Installation (1 ; 1001) selon l'une des revendications précédentes, **caractérisée en ce qu'**elle est apte à fonctionner selon un troisième mode de fonctionnement (figure 3 ; figure 5), prévu pour la production d'eau chaude sanitaire en saison froide ou en saison chaude pendant la journée, dans lequel la pompe à chaleur (4 ; 1004) fonctionne en mode chauffage, les calories du flux d'air (F) étant transmises à la pompe à chaleur (4 ; 1004), de sorte qu'un ballon d'eau chaude sanitaire (5), constituant l'organe de consommation d'énergie thermique (5, 9), se réchauffe grâce à la pompe à chaleur (4 ; 1004) qui lui fournit des calories.

9. Installation (1 ; 1001) selon l'une des revendications précédentes, **caractérisée en ce que** l'unité de commande (12) pilote la marche, l'arrêt et l'intensité des moyens de mise en dépression (10) et de préférence la marche et l'arrêt de la pompe à chaleur (4 ; 1004).

10. Installation (1 ; 1001) selon l'une des revendications précédentes, **caractérisée en ce que** l'unité de commande (12) enregistre la consommation électrique de la pompe à chaleur (4 ; 1004), des moyens de mise en dépression (10) et de chaque pompe (11A, 11B, 11C).

11. Installation (1 ; 1001) selon l'une des revendications précédentes, **caractérisée en ce que** le système de chauffage ou de rafraichissement (2) du flux d'air (F) est constitué par une chambre d'échange thermique (24) qui débouche dans une première entrée (e13) de l'échangeur thermique (3) et qui s'étend le long de la face intérieure de la toiture (101) du bâtiment (100).

12. Installation (1 ; 1001) selon l'une des revendications 1 à 10, **caractérisée en ce que** le système de chauffage ou de rafraichissement (2) du flux d'air (F) est constitué par une chambre d'échange thermique (24) qui débouche dans une première entrée (e13) de l'échangeur thermique (3) et qui s'étend le long d'une face arrière (21) de modules photovoltaïques qui sont installés sur la toiture (101) du bâtiment (100) ou qui constituent la toiture (101) et **en ce que** l'installation comprend un capteur de température (13) qui mesure la température des modules photovoltaïques et qui est relié à l'unité de commande (12).

13. Installation (1 ; 1001) selon l'une des revendications précédentes, **caractérisée en ce qu'**elle comporte au moins un ballon d'eau chaude sanitaire (5) et/ou un émetteur thermique (9) prévu pour le chauffage et le rafraichissement du bâtiment (100), le ballon d'eau chaude sanitaire (5) et/ou l'émetteur thermique (9) constituant un organe de consommation d'énergie thermique (5, 9) et **en ce que** l'installation comprend de préférence une résistance électrique (53) prévue pour chauffer le ballon (5).

14. Installation (1 ; 1001) selon l'une des revendications précédentes, **caractérisée en ce qu'**elle comprend en outre :
- un ballon d'eau chaude sanitaire (5) qui constitue un premier organe de consommation d'énergie thermique (5, 9) et qui est équipé d'un premier échangeur thermique (51) et d'un second échangeur thermique (52) pour le chauffage de l'eau chaude sanitaire, une entrée (e5) du ballon (5) étant raccordée à un réseau de distribution d'eau (55),
**en ce que** le circuit secondaire (B) comprend :
- une conduite aller (B1) qui relie une sortie (s42) de la zone de distribution (42) à une entrée (e17) d'une bouteille de découplage (7) qui dissocie le débit du circuit secondaire (B) du débit d'un circuit tertiaire (C) de liquide caloporteur, le circuit tertiaire (C) comportant au moins un émetteur thermique (9) qui constitue un second organe de consommation d'énergie thermique et qui est prévu pour chauffer ou rafraichir le bâtiment (100), l'organe de stockage (6) d'énergie thermique étant intercalé entre une portion amont (B11) et une portion aval (B12) de la conduite aller (B1),
- une vanne (V2), dite seconde, installée sur la portion amont (B11) de la conduite aller (B1),
- une conduite retour (B2) qui relie une sortie (s17) de la bouteille de découplage (7) à une entrée (e41) de la zone de distribution (42) de la pompe à chaleur (4),
- une conduite de dérivation (B3) qui comprend une portion aller (B31), qui relie la seconde sortie (sV2) de la seconde vanne (V2) à l'entrée (e52) du second échangeur thermique (52), et une portion retour (B32), qui relie la sortie (s52) du second échangeur thermique (52) à la conduite retour (B2) du circuit secondaire (B),
**en ce que** la seconde vanne (V2) est commutable dans deux positions, dans lesquelles l'entrée (eV2) de la seconde vanne (V2) est reliée sélectivement à la première sortie (s1 V2) ou à la seconde sortie (s2V2), et
**en ce que** l'unité de commande (12) pilote la position de la seconde vanne (V2).

15. Méthode de mise en oeuvre d'une installation (1 ; 1001) selon l'une des revendications précédentes, **caractérisée en ce que** l'utilisation de l'énergie thermique stockée dans l'organe de stockage (6 ; 1006), pour l'alimentation de l'organe de consommation d'énergie thermique (9, 5), est déphasée dans le temps par rapport à la production d'énergie thermique de la pompe à chaleur (4 ; 1004).
